# EUROPEAN PATENT APPLICATION

(11) **EP 4 383 823 A1**
(43) Date of publication of application: **12.06.2024**
(21) Application number: 23215185.2
(22) Date of filing: 08.12.2023
(51) Int. Cl.: H04W 48/00, H04W 48/20, H04W 76/10, H04W 84/12

(54) **COMMUNICATION APPARATUS, METHOD FOR CONTROLLING THE SAME, PROGRAM, AND STORAGE MEDIUM**

(30) Priority: 09.12.2022 JP 2022196855
(71) Applicant: CANON KABUSHIKI KAISHA, Tokyo 146-8501 (JP)
(72) Inventor: NAKAJIMA, Takafumi, Tokyo, 146-8501 (JP)
(74) Representative: Canon Europe Limited

(57) **Abstract**

A communication apparatus having a plurality of station (STA) functions exclusively operates the plurality of STA functions, executes sharing processing for sharing a parameter to be used to connect to an access point (AP), acquires information about the plurality of STA functions, selects an STA function to be used for the sharing processing in accordance with the information acquired by the acquisition unit, and connects to the AP based on the parameter shared by using the STA function selected by the selection unit.

## Description

### BACKGROUND OF THE INVENTION

### Field of the Invention

The present invention relates to communication parameter setting in a communication apparatus.

### Description of the Related Art

There has been proposed a technique for concurrently operating a station function (hereinafter referred to as an STA function) and an access point function (hereinafter referred to as an AP function), for example, in a wireless communication apparatus conforming to the Institute of Electrical and Electronics Engineers (IEEE)802.11 standard and the Wi-Fi standard. The STA function enables connection to an external AP, and the AP function enables connection to an external STA.

Similarly, there has also been proposed a technique for concurrently operating a plurality of STA functions. The plurality of STA functions enables connection to plurality of different external APs.

As a method for concurrently operating a plurality of STA functions with one communication apparatus, a certain method operates a plurality of Radio Frequency (RF) circuits on the communication apparatus for each STA function. There has also been proposed a technique for implementing a plurality of STA functions by exclusively operating a plurality of STA interfaces as virtual interfaces in time series on one RF circuit. This method implements a plurality of STA functions with one RF circuit, so that the technique is cost-advantageous as compared with the method for mounting a plurality of RF circuits.

Techniques devised to automatically set communication parameters for accessing a wireless network include the Wi-Fi Protected Setup standard (hereinafter referred to as WPS) and the Device Provisioning Protocol (Wi-Fi DPP) standard (hereinafter referred to as DPP). Hereinafter these techniques are referred to as automatic communication parameter setting.

In the WPS, an apparatus called a registrar having a parameter provision function delivers communication parameters to an apparatus called an enrollee having a parameter reception function through processing prescribed in the WPS protocol between an AP and an STA. The registrar function may be included in an AP or retained by an external apparatus connected to the AP. The enrollee function is a function stored in the STA. Communication parameters delivered from the registrar to the enrollee are communication parameters for accessing a wireless network configured by APs. Examples of communication parameters include a Service Set Identifier (SSID) of a wireless network configured by APs, and a pass phrase for generating encryption keys used to wirelessly communicate encrypted and decoded data.

In the DPP, an apparatus called a configurator provides communication parameters to an apparatus called an enrollee by using pre-shared information called bootstrap information. Japanese Patent Application Laid-Open No. 2018-37978 discloses a technique for giving frequency information to the bootstrap information to be included in two-dimensional codes based on whether a communication apparatus is currently connecting to an AP.

There is assumed an example case where a wireless communication apparatus configured to concurrently operate a plurality of STA functions performs the automatic communication parameter setting. In such a case, the communication apparatus needs to select which of a plurality of communication interfaces that can perform STA functions is to be used to perform automatic communication parameter setting. If a user is prompted to select which communication interface is to be used to perform the automatic communication parameter setting, the user needs to consciously select a communication interface, reducing the convenience of the user inexperienced in operation.

### SUMMARY OF THE INVENTION

The present invention is directed to improving the user convenience in a case where a communication apparatus capable of concurrently operating a plurality of STA functions performs automatic communication parameter setting.

According to a first aspect of the present invention, there is provided a communication apparatus as specified in claims 1 to 6. According to a second aspect of the present invention, there is provided a method for controlling a communication apparatus as specified in clam 7. According to a third aspect of the present invention, there is provided a program for causing a computer to function as the communication apparatus as specified in clam 8 and a computer-readable storage medium as specified in claim 9.

Further features of the present invention will become apparent from the following description of embodiments with reference to the attached drawings.

### BRIEF DESCRIPTION OF THE DRAWINGS

Fig. 1 illustrates a network configuration indicating an overall configuration of a communication system according to an embodiment.
Fig. 2 is a hardware configuration of a communication apparatus.
Fig. 3 is a flowchart illustrating processing performed by the communication apparatus.
Fig. 4 is a flowchart illustrating processing for selecting a communication interface.
Fig. 5 is a sequence diagram according to an embodiment.
Fig. 6 illustrates an example of a user interface according to an embodiment.
Fig. 7 illustrates another example of a user interface according to an embodiment.
Fig. 8 illustrates still another example of a user interface according to an embodiment.

### DESCRIPTION OF THE EMBODIMENTS

Embodiments of the present invention will be described below with reference to the accompanying drawings. The following embodiments do not limit the present invention. Not all of the combinations of the features described in each present embodiment are essential to the solutions for the present invention.

An example of a wireless Local Area Network (LAN) system conforming to the Institute of Electrical and Electronics Engineers (IEEE) 802.11 standard will be described below. In addition to the IEEE802.11 standard series, the wireless LAN system may also conform to other communication standards such as Bluetooth^{®}, NFC, UWB, Zigbee, and MBOA. UWB is an abbreviation of Ultra Wide Band, and MBOA is an abbreviation of Multi Band OFDM Alliance. OFDM is an abbreviation of Orthogonal Frequency Division Multiplexing. NFC is an abbreviation of Near Field Communication. UWB includes wireless Universal Serial Bus (USB) and wireless 1394. The following embodiments are not intended to limit the scope of the claimed invention. Although a plurality of features is described in the embodiments, not all of the plurality of features are indispensable to the present invention, and the plurality of features may be combined in an arbitrary way. In the accompanying drawings, identical or similar components are assigned the same reference numerals, and duplicated descriptions thereof will be omitted.

In the following embodiments, a "connection" refers to a state where a signal and data can be transmitted and received, and a circuit or transmission path (link) in a communicable state is established between a pair of communication apparatuses.

A first embodiment will be described below with reference to drawings. An example of performing communication between apparatuses through a wireless LAN communication conforming to the IEEE802.11 standard will be described below.

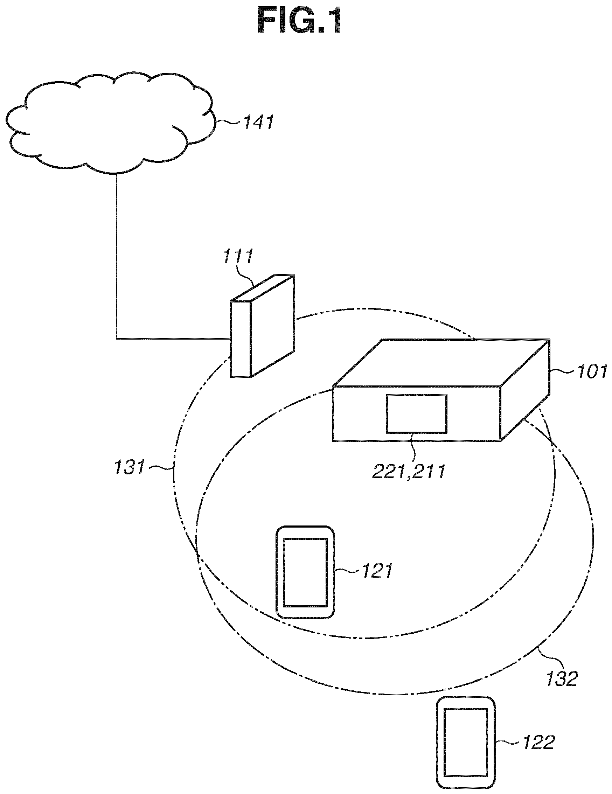

Fig. 1 illustrates an overall configuration of a network according to the present embodiment. A network according to the present embodiment includes a communication apparatus operating in conformance with the Wi-Fi Device Provisioning Protocol (DPP) standard. Referring to Fig. 1, a communication apparatus 101 is a printer operating as a station (STA). A communication apparatus 111 operates as an access point (AP) which is a wireless base station (master station) and forms a wireless network 131. The communication apparatuses 121 and 122 are smart devices. The communication apparatus 121 operates the AP function, forms a wireless network 132, and connects to the STA. The communication apparatuses 101, 121, and 122 are able to perform DPP-based communication parameter setting. In the DPP, the communication apparatuses 121 and 122 are configurators for providing communication parameters, and the communication apparatus 101 is an enrollee for receiving communication parameters. According to the present embodiment, the communication apparatus 121 operates as a configurator and the wireless network 132 that the communication apparatus 121 forms with the AP function is a wireless network to be connected based on the DPP. The communication apparatus 101 may serve as a configurator, and the communication apparatuses 121 and 122 may serve as enrollees. The wireless network 141 is a Wide Area Network (hereinafter referred to as WAN). The wireless network 131 formed by the communication apparatus 111 connects to a Wide Area Network (WAN) 141 by using the communication apparatus 111 as a gateway.

The communication apparatus 101 can selectively connect to the communication apparatuses 111, 121, and 122. In the present embodiment, a DPP-based connection between the communication apparatuses 101 and 121 will be described. Similar processing also applies to a DPP-based connection between the communication apparatuses 101 and 122.

A case where the communication apparatus 101 performs the DPP by using a first STA function unit 242 will be described below. The communication apparatus 101 performs similar processing in a case of using a second STA function unit 243.

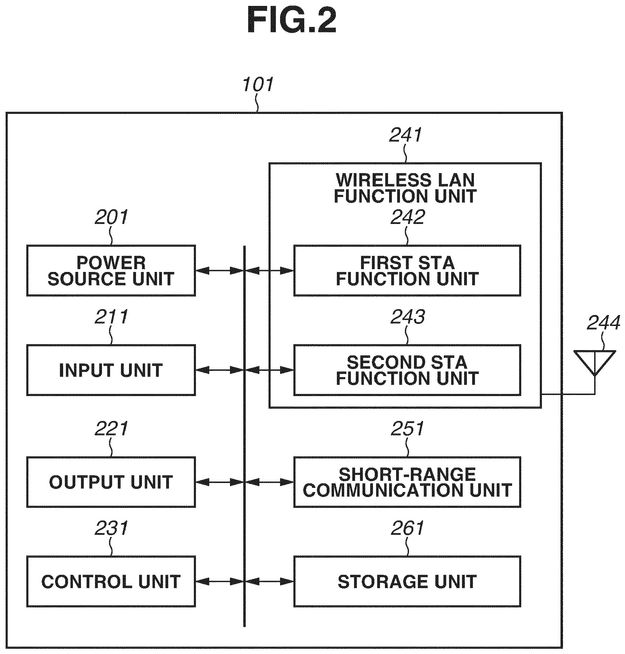

Fig. 2 illustrates a hardware configuration of the communication apparatus 101. The communication apparatus 101 includes a power source unit 201, an input unit 211, an output unit 221, a control unit 231, a wireless LAN function unit 241, the first STA function unit 242 and the second STA function unit 243 (included in the wireless LAN function unit 241), an antenna 244, a short-distance communication unit 251, and a storage unit 261. The first STA function unit 242 and the second STA function unit 243 are configured to operate a plurality of STA functions by using one RF circuit as the wireless LAN function unit 241. These two STA function units 242 and 243 operate by exclusively controlling the STA function in time series. According to the present embodiment, a unit of the STA function in a communication apparatus operating a plurality of STA functions is referred to as a communication interface. Each communication interface operates based on a different Media Access Control (MAC) address. According to the present embodiment, the wireless LAN function unit 241 exclusively controls each STA function unit. However, a control unit different from the wireless LAN function unit 241 may be separately provided as an STA function control unit.

The antenna 244 may be a combination of two different antennas capable of communication through different frequency bands, such as an antenna capable of 2.4 GHz communication and an antenna capable of 5 GHz communication, or one common antenna capable of communication through a plurality of frequency bands.

The short-distance communication unit 251 controls short-distance wireless communication, such as NFC and Bluetooth^{®}.

The power source unit 201 supplies power to each hardware component. The power source unit 201 acquires power from an Alternating Current (AC) power source or a battery.

The input unit 211 including, for example, buttons receives various operations from the user.

The output unit 221 provides various outputs to the user. Examples of outputs provided by the output unit 221 include the display on Light Emitting Diodes (LEDs), the display on the screen, audio output from a speaker, and vibration output. The input unit 211 and the output unit 221 may be implemented as one module, such as a touch panel. In the present embodiment, input and output operations are performed using a touch panel.

The first STA function unit 242 and the second STA function unit 243 perform wireless LAN control conforming to the IEEE802.11 standard and electric wave transmission and reception to connect to APs and communication apparatuses operating the AP functions. The communication apparatus 101 is configured to concurrently operate two different STA functions and connect to up to two devices of APs and communication apparatuses operating the AP functions. Further, the first STA function unit 242 and the second STA function unit 243 also mount a DPP-based wireless communication setting protocol.

The control unit 231 includes a processor, such as a central processing unit (CPU) and micro processing unit (MPU), and controls the entire communication apparatus 101 by executing programs stored in the storage unit 261.

The storage unit 261 includes a memory such as a read only memory (ROM) and a random access memory (RAM) and stores programs for performing various processing (described below) and various information.

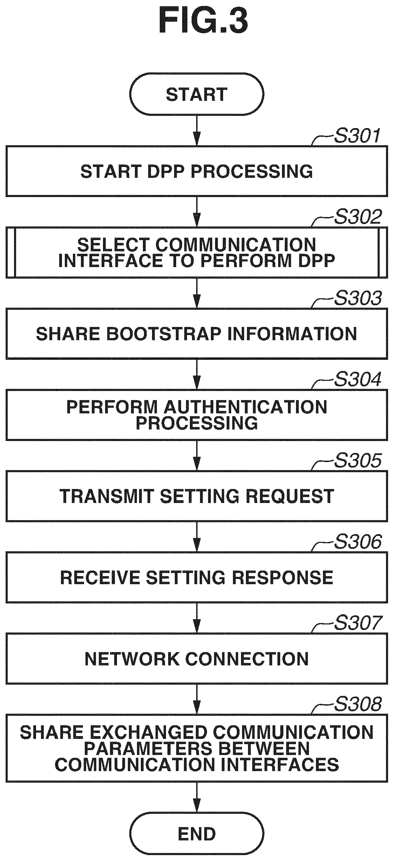

Fig. 3 is a flowchart illustrating processing which is performed by the communication apparatus 101. In step S301, the communication apparatus 101 starts the processing of the flowchart in Fig. 3 based on an instruction which is provided when the user operates the input unit 211 to select a setting menu.

In step S302, the communication apparatus 101 selects a communication interface that performs DPP-based communication parameter setting processing. Communication interface selection processing will be described in detail below.

In step S303, the communication apparatus 101 shares bootstrap information with the communication apparatus 121 operating as a configurator, by using either the first STA function unit 242 or the second STA function unit 243 selected in step S302.

The communication apparatus 101 outputs the bootstrap information including the MAC address of the selected communication interface. In the present embodiment, the bootstrap information is output by displaying a Quick Response (QR) code (registered trademark) in the output unit 221. The method for outputting the bootstrap information is not limited to displaying a QR code. The information may be notified to other communication apparatuses (the communication apparatuses 121 and 122) through short-distance wireless communication, such as NFC and Bluetooth^{®} via the short-distance communication unit 251. The bootstrap information for each communication interface may be generated for each of a plurality of communication interfaces in advance, selected from the storage unit 261, and then output. Moreover, at the time of selection of a communication interface, the bootstrap information may be generated and output in step S302. The bootstrap information includes public key information, MAC address, channel information, and frequency band information for a wireless network. For devices for which a QR code (registered trademark) is easily displayable by an external connection communication unit, the bootstrap method may be determined to be executed by using a QR code.

In step S304, the communication apparatus 101 performs authentication processing. Initially, to perform the authentication processing, the communication apparatus 101 waits for an authentication request transmitted from the communication apparatus 121. The "authentication request" refers to a DPP_Authentication_Request frame conforming to the DPP standard. In step S303, if the authentication request is not received within a predetermined time since start of waiting for the authentication request, the communication apparatus 101 may end the communication parameter reception processing. The authentication request includes authentication information to be used for the authentication processing, identification information for the communication apparatus 121, a random number generated by the communication apparatus 121, and a public key for shared key generation (a public key for the communication apparatus 121) to be used to generate a shared key. The shared key is used to encrypt the random number for authentication. Here, the "authentication information" refers to the hash value of a public key for authentication of the communication apparatus 101 included in the QR code. The identification information for the communication apparatus 121 is the hash value of the public key for authentication. The random number is used for the authentication upon reception of an authentication response (described below).

The communication apparatus 101 having received the authentication request performs processing for verifying the apparatus that has transmitted the authentication request. The communication apparatus 101 determines whether the verification processing is successful by using the authentication information included in the authentication request. More specifically, the communication apparatus 101 calculates the hash value of the public key for authentication of the communication apparatus 101 and compares the calculated hash value with the hash value (authentication information) included in the authentication request. If both hash values are matched, the communication apparatus 101 determines that the verification is successful. The hash function used to calculate the hash value in this case is specified by the DPP standard, and is the same as the hash function used to calculate the hash value by the communication apparatus 121. If the verification is successful, the communication apparatus 101 generates a shared key by using both a public key for shared key generation for the communication apparatus 121 and a secret key for shared key generation for the communication apparatus 101. For example, the shared key is generated based on the Elliptic Curve Diffie-Hellman (ECDH) method. The shared key generation method is not limited to the ECDH method but may be other public key encryption methods. The communication apparatus 101 transmits an authentication response. If the verification fails, the communication apparatus 101 does not transmits an authentication response. Instead, if the verification fails, the communication apparatus 101 may transmit an authentication response indicating that the verification failed. The "authentication response" refers to a DPP_Authentication_Response frame conforming to the DPP standard. The authentication response includes the public key for shared key generation for the communication apparatus 101, and the random number generated by the communication apparatus 101, and tag information. The tag information is generated by encrypting the hash value used for the random number included in the authentication request transmitted by the communication apparatus 121, by using the above-described shared key. The tag information is used for the authentication processing performed by the communication apparatus 121. The communication apparatus 101 having transmitted the authentication response waits for an authentication confirmation transmitted from the communication apparatus 121.

The wait time for the authentication confirmation may be a predetermined time since transmission of the authentication response. Here, the "authentication confirmation" is a DPP _Authentication _Confirm frame conforming to the DPP standard and includes the tag information. The tag information is generated by the communication apparatus 121 encrypting the random number included in the authentication response transmitted by the communication apparatus 101, by using the shared key.

In step S305, in response to completion of the authentication processing, the communication apparatus 101 transmits a setting request to the communication apparatus 121 as a configurator. The "setup request" refers to a DPP_Configuration_Request frame conforming to the DPP standard.

In step S306, the communication apparatus 101 receives the setting response from the communication apparatus 121 as a configurator. The "setting response" refers to a DPP_Configuration_Response frame conforming to the DPP standard. The setting response transmitted by the communication apparatus 121 includes communication parameters, an effective period of the communication parameters, the public key dedicated for the configurator as the communication apparatus 121, role information, and provision channel information. The communication parameters include the public key included in the authentication response from the communication apparatus 101 in addition to a credential conforming to the DPP standard. The information included in the setting response is encrypted using the generated shared key generated by the communication apparatus 121. The communication apparatus 101 having received the setting response decodes the information included in the setting response, by using the shared key.

In step S307, the communication apparatus 101 performs the connection to a wireless network formed by the communication apparatus 121, based on the communication parameters obtained through decoding.

In step S308, based on the setting of the communication parameters, the communication apparatus 101 shares the communication parameters received from the configurator between the STA functions so that the first STA function unit 242 and the second STA function unit 243 is able to use the communication parameters.

For example, in a case where the communication apparatus 101 establishes a connection by performing the DPP via the first STA function unit 242, information about the AP connected via the first STA function unit 242 may be displayed on a user interface (UI) for selecting a destination to be connected using the second STA function unit 243. In consideration that the first STA function unit 242 has been connected to an apparatus, the communication apparatus 101 may perform control so as not to select the apparatus as a connection destination even if the communication apparatus 101 can connect to the apparatus using the second STA function unit 243, to prevent duplicated connections to a partner apparatus.

In a case where the communication apparatus 101 connects to an apparatus by performing the DPP via the first STA function unit 242, shared Connector information may be shared with the second STA function unit 243. Then, in connecting to the apparatus via the second STA function unit 243, the communication apparatus 101 may skip the DPP-based communication parameter setting processing and perform connection processing through Network Introduction processing. In a case where the Connector information is shared, the MAC address may be excluded from the bootstrap information. With the exclusion of the MAC address, no communication interface operating as an enrollee is fixed, so that the Connector information is shareable by the communication interfaces. The Connector information includes group information, role information, a network access key, and the effective period of the network access key. The group information is group information for a DPP network in which a communication apparatus that transmits the Connector information is participable. The role information indicates the role, such as an STA, an AP, or a Configurator, on the DPP network to be played by the communication apparatus that transmits the Connector information. The network access key is key information to be used for the connection processing in the Network Introduction processing. The effective period of the network access key is information about the effective period during which the network access key is useable. The Network Introduction processing is connection processing in which enrollees are connected to each other based on the Connector information. Examples of such connection processing include connection processing in which a communication apparatus having a role of an AP connects to a communication apparatus having a role of an STA, where the role is specified in the role information. In establishing a connection based on the DPP protocol, the STA transmits PeerDiscoveryRequest including the Connector information for the STA itself to the connection target AP. The AP that has received the PeerDiscoveryRequest checks the Connector information for the STA included in PeerDiscoveryRequest. In a case where the AP determines that the STA as the partner apparatus is a valid STA based on information including the network access key included in the Connector information, the AP transmits PeerDiscoveryResponse including the Connector information for the AP itself to the STA. Similarly, the STA also determines whether the AP is a valid AP based on the Connector information for the AP. Subsequently, the STA and the AP perform the transmission and reception of the Authentication frame, and connection processing with Association Request and Association Response as authentication processing is performed.

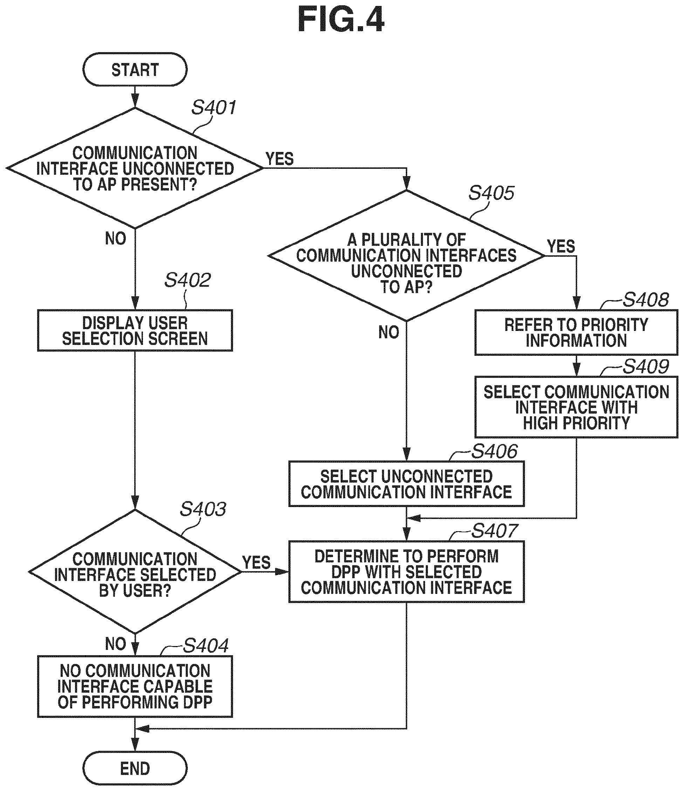

Fig. 4 is a flowchart illustrating the communication interface selection processing in step S302 in which the communication apparatus 101 performs the DPP-based communication parameter setting. Although, in the present embodiment, the flowchart in Fig. 4 (described below) is executed by a program stored in the storage unit 261, the present invention is not limited thereto.

In step S401, the communication apparatus 101 determines whether any communication interface that is unconnected to an external AP via the first STA function unit 242 or the second STA function unit 243 is present. The communication apparatus 101 may determine the communication interface that is currently performing the connection processing is not an unconnected communication interface, even in a state where the communication interface is unconnected to an AP. If any communication interface that is unconnected is present (YES in step S401), the processing proceeds to step S405. If no communication interface that is unconnected is present (NO in step S401), the processing proceeds to step S402.

The operation in step S402 is performed when both communication interfaces, namely, the first STA function unit 242 and the second STA function unit 243, are connected to an AP. In a case where the DPP-based communication parameter setting is to be performed in such a state, the communication apparatus 101 may display a UI to prompt the user to select which communication interface is to be used to connect to the AP. In this case, the communication apparatus 101 may display information about the connected AP to make it easier for the user to identify the communication interface. Then, the processing proceeds to step S403.

In step S403, the communication apparatus 101 determines whether the user selects a communication interface in step S402.

If the user selects a communication interface (YES in step S403), the processing proceeds to step S407. If the user selects no communication interface (NO in step S403), the processing proceeds to step S404.

The operation in step S404 is performed when the user selects no communication interface. In step S404, the communication apparatus 101 determines that no communication interface is capable of performing the DPP and ends the communication interface selection processing.

In this case, the communication apparatus 101 may display an error message on a UI and ends the DPP processing.

In step S405, the communication apparatus 101 determines whether a plurality of communication interfaces that is unconnected to an external AP is present.

According to the present embodiment, examples of cases where a plurality of communication interfaces that is unconnected is determined to be present include a case where both the first STA function unit 242 and the second STA function unit 243 are unconnected to an AP and a case where a communication interface unconnected to an AP cannot be uniquely identified. If a plurality of communication interfaces that is unconnected to an AP (YES in step S405) is present, the processing proceeds to step S408. If only one communication interface is unconnected to an AP (NO in step S405), the processing proceeds to step S406.

In step S406, the communication apparatus 101 selects a communication interface unconnected to an AP. The processing then proceeds to step S407. For example, according to the present embodiment, in a case where the first STA function unit 242 is connected to the AP 111 and the second STA function unit 243 is unconnected to an AP, the second STA function unit 243 is selected as a communication interface that performs the DPP.

In step S407, the communication apparatus 101 determines the communication interface selected in the preceding step to be a communication interface that performs the DPP.

The operation in step S408 is performed in a case where a plurality of communication interfaces that is unconnected to an AP is present. In step S408, the communication apparatus 101 refers to the priority information. The priority information will be described below as information prestored in the storage unit 261. The priority information is used to specify the priority of the communication interface preselected by the user, and is stored in the storage unit 261. The priority information is not the priority predetermined by the user but may be information for prioritizing a communication interface that controls a frequency band with a less congestion situation. Alternatively, the use of the first STA function unit 242 in the 2.4 GHz band and the second STA function unit 243 in the 5 GHz band may be preset. The priority information may be based on information about which frequency band is to be prioritized for connection. For example, the priority information may be information that the 5 GHz band is prioritized for connection based on information about the communication rate, for example, the 5 GHz band enables communication at a higher communication rate. The priority information is not limited thereto but may be information used to select the first STA function unit 242 and the second STA function unit 243. Then in step S409, a communication interface is selected based on the priority information referred to in step S408, and the processing proceeds to step S407.

The description has been provided of an example where a communication interface is automatically selected by a program. However, the user may be prompted to select whether a communication interface is to be selected manually or automatically.

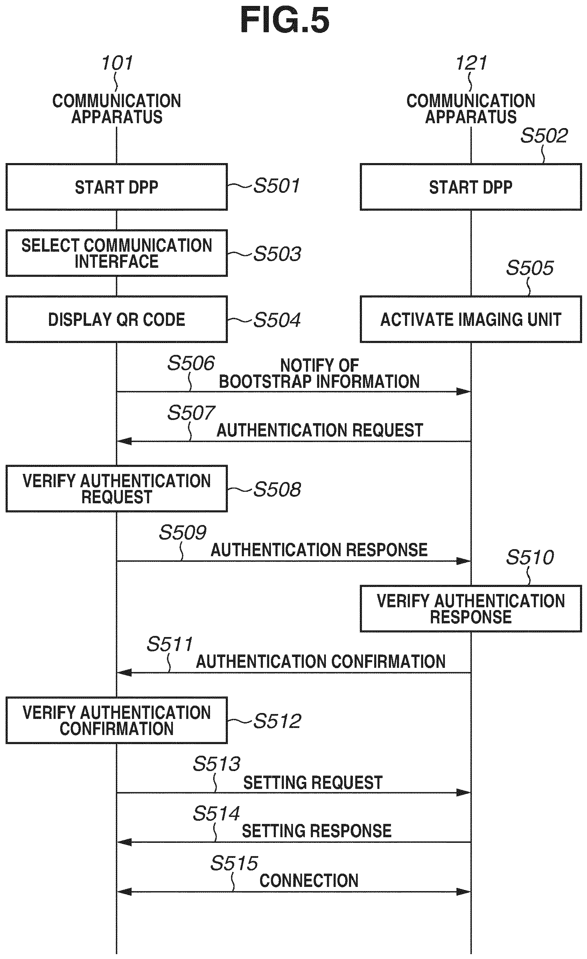

Fig. 5 illustrates a connection sequence between the communication apparatuses 101 and 121.

In steps S501 and S502, the communication apparatuses 101 and 121 receive a parameter reception instruction from the user and then start the DPP processing, respectively. The communication apparatus 101 selects a communication interface for performing the DPP based on the communication interface selection processing in step S302, displays as a QR code the bootstrap information including the MAC address information for the selected communication interface via the output unit 221, and waits for an authentication request. The QR code may be displayed on the output unit 221 of the communication apparatus 101 or the output unit of an external apparatus. If the communication apparatus 101 cannot receive the authentication request within a predetermined time period, the communication apparatus 101 may end waiting for reception of the authentication request. In step S503, if the communication apparatus 101 is not provided with a display for displaying a QR code, and the QR code is printed on a label stuck on the housing or accessory, the operation in step S504 is skipped. In step S502, the communication apparatus 121 receives a parameter setting instruction from the user. In step S505, the communication apparatus 121 activates the imaging unit for capturing the QR code displayed on the communication apparatus 101 (or printed on a label).

The communication apparatus 121 captures the QR code via the imaging unit, then in step S506, the communication apparatus 121 acquires information indicated by the QR code. The method for outputting the bootstrap information is not limited to displaying the QR code. The bootstrap information may be notified to other communication apparatuses (such as the communication apparatuses 121 and 122) via short-distance wireless communication such as NFC and Bluetooth^{®} via the short-distance communication unit 251. In this case, the operations in steps S504 and S505 are skipped, and the operation in step S506 is performed through the short-distance communication.

In step S507, the communication apparatus 121 that has acquired the information indicated by the QR code generates an authentication request and transmits it to the communication apparatus 101. The communication apparatus 101 receives the authentication request. In step S508, the communication apparatus 101 verifies the details of the received authentication request. If the communication apparatus 101 determines that the communication apparatus 121 having transmitted the authentication request is the apparatus having captured the QR code, then in step S509, the communication apparatus 101 generates an authentication response and transmits it to the communication apparatus 121. The communication apparatus 101 having transmitted the authentication response to the communication apparatus 121 waits for an authentication confirmation to be transmitted from the communication apparatus 121.

In step S510, the communication apparatus 121 that has received the authentication response verifies the details of the authentication response. If the communication apparatus 121 determines that the authentication is successful, then in step S511, the communication apparatus 121 transmits an authentication confirmation to the communication apparatus 101. In step S511, the communication apparatus 101 receives the authentication confirmation from the communication apparatus 121. In step S512, the communication apparatus 101 verifies the details of the authentication confirmation. The communication apparatus 101 determines that the authentication is successful when the communication apparatus 101 has correctly decoded the tag information by using the shared key generated by the communication apparatus 101 itself. If the communication apparatus 101 determines that the authentication is successful, then in step S513, the communication apparatus 101 transmits a setting request to the communication apparatus 121 to request it for the communication parameters, and waits for a setting response to be transmitted from the communication apparatus 121.

When the communication apparatus 121 receives the setting request, then in step S514, the communication apparatus 121 transmits a setting response including the communication parameters. When the communication apparatus 101 receives the setting response, then in step S515, the communication apparatus 101 connects to the wireless network 132 formed by the communication apparatus 121 based on the communication parameters included in the setting response.

The description has been provided of a case where the communication apparatus 101 connects to the wireless network 132 formed by the communication apparatus 121 by using the AP function. However, the present embodiment is not limited thereto. The present embodiment is also applicable to a case where the communication apparatus 101 connects to a network formed by other APs or communication apparatuses having the AP functions. In this case, the communication apparatus 121 serving as a configurator forms a wireless network for sharing the communication parameters by using the DPP and exchanges the Connector information including the communication parameters with the enrollee.

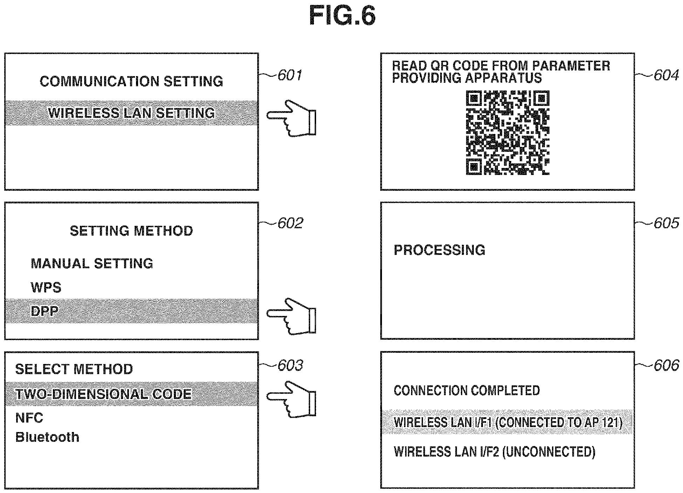

Fig. 6 illustrates an example of a transition of user interfaces. A screen 601 indicates that the communication apparatus 101 is connected to none of the communication apparatuses 111, 121, and 122. The screen 601 appears when the user operates the output unit 221 and the input unit 211 to select the setting menu. The screen 601 as a "Communication Setting" screen includes a "Wireless LAN Setting" setting menu. When the user selects "Wireless LAN Setting", a screen 602 appears.

The screen 602 as a "Setting Method" screen includes "Manual Setting", "WPS", and "DPP" setting menus. For "Manual Setting", the user manually sets Service Set Identifier (hereinafter referred to as SSID) and a pass phrase necessary for wireless connection. "WPS" refers to Wi-Fi Protected Setup which is a wireless communication setting protocol as with the DPP. In this example, the user selects "DPP" in the screen 602.

A screen 603 as a "Select Method" screen includes the "Two-Dimensional Code", "NFC", and "Bluetooth^{®}" setting menus. For "Select Method", the user selects a bootstrapping method for the DPP. The two-dimensional code represents bootstrapping by the QR code. Referring to the screen 603, the user selects "Two-Dimensional Code". When "NFC" or "Bluetooth^{®}" is selected, the bootstrapping is performed through short-distance wireless communication via the short-distance communication unit 251.

A screen 604 displays bootstrapping information as a QR code (registered trademark). When the communication apparatus 121 or 122 reads this QR code, the DPP processing is started. In this case, the communication apparatus 121 or 122 serves a configurator that provides the communication parameters, and the communication apparatus 101 serves as an enrollee that receives the communication parameters.

A screen 605 displays "processing" indicating a state where the DPP processing is currently being performed with the communication apparatus 121 or 122 via the first STA function unit 242 or the second STA function unit 243, respectively. The above-described communication interface selection processing in step S302 determines which communication interface, more specifically, the first STA function unit 242 or the second STA function unit 243,) is to be selected. According to the present embodiment, the first STA function unit 242 is selected.

A screen 606 displays a state where connection is completed upon completion of wireless connection with the communication apparatus 121 or 122 via the first STA function unit 242. The screen 606 may perform display so that the user recognizes which communication interface, more specifically, the first STA function unit 242 or the second STA function unit 243, has been used to complete the connection. For example, the screen 606 displays information about the connection destination AP together with identification information for the communication interface. The information about the AP may be the apparatus name, SSID, or other information for identifying the AP. According to the present embodiment, information about the communication apparatus 121 is displayed.

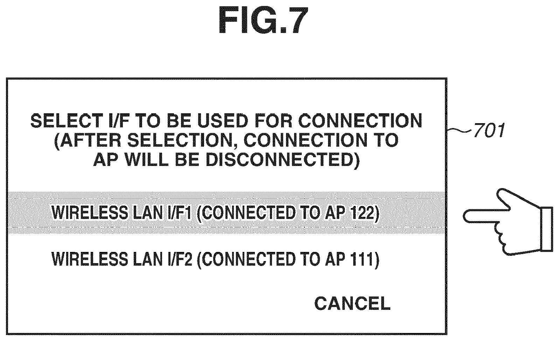

Fig. 7 illustrates a screen 701 in which the user selects a communication interface in step S402.

In step S402, in a case where both communication interfaces, the first STA function unit 242 and the second STA function unit 243, are connected to an AP, the communication apparatus 101 displays the screen 701 on the input unit 211 and the output unit 221 so that the user selects which communication interface is to be used to perform the DPP.

The screen 701 displays a connection state where the communication apparatus 101 is connected to the communication apparatus 122 operating with the AP function, via the first STA function unit 242. The screen 701 also displays a state where the communication apparatus 101 is connected to the AP 111 via the second STA function unit 243. These messages may be displayed as texts or icons. The screen 701 allows the user to select which communication interface is to be used to perform the DPP. In this case, the screen 701 may notify the user that performing the DPP will disconnect the connection to the AP. The screen 701 may display information (e.g., information about the SSID) of the connected AP in association with the communication interface to enable the user to identify the communication interface. If "Cancel" is selected in the communication interface selection screen 701 in Fig. 7, the processing may proceed to step S404.

While the description has been provided of a case of the DPP-based communication parameter setting, the present invention is not limited thereto. The DPP-based communication parameter setting is also applicable to a case where the WPS is performed. In performing the WPS, the communication apparatus 101 performs processing similar to that of the flowchart in Fig. 3 and receives the start of the WPS processing as in the start of the DPP processing in step S301. Subsequently, the communication apparatus 101 selects a communication interface for performing the WPS processing as in the operation in step S302. For the communication interface selection, the communication apparatus 101 performs processing similar to that of the flowchart in Fig. 4. After selecting a communication interface in the operation equivalent to the operation in step S302, the communication apparatus 101 performs the WPS processing by using the communication interface selected in conformance with the WPS protocol.

The present invention is applicable not only to the WPS processing but also to other automatic communication parameter setting methods.

Although, in the present embodiment, the communication apparatus 101 determines whether any communication interface is unconnected to an AP in steps S401 and S405 in the flowchart in Fig. 4, the present invention is not limited thereto. For example, the communication apparatus 101 may also determine whether the automatic communication parameter setting is currently being performed. There is assumed an example case where the automatic communication parameter setting is newly performed in a state where the automatic communication parameter setting has been started via the first STA function unit 242. In such a case, the second STA function unit 243 that is unconnected to the AP and has not performed the automatic communication parameter setting will be selected.

The two STA functions cannot be concurrently performed depending on the automatic communication parameter setting method. For example, the WPS specifications describe that, when the Push Button method is performed in the WPS processing, the WPS processing is to be abnormally ended as session overlapping when an AP and a plurality of enrollees are performing the WPS. Thus, if a plurality of STA functions performs the WPS processing at the same time, an error results. When the Push Button method for the WPS is currently being performed by either one communication interface, the same method should not be performed by the other communication interface.

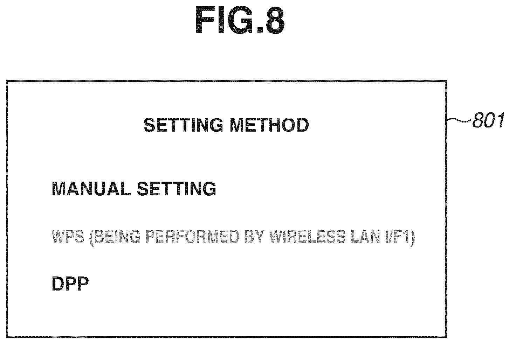

Fig. 8 illustrates a screen for selection of the automatic communication parameter setting method in a state where the WPS is currently being performed by the first STA function unit 242. A screen 801 corresponds to the screen 602 in Fig. 6. In this case, "WPS" is grayed out to be disabled. Since the WPS and DPP are performable at the same time, "DPP" is selectable. In a case where "DPP" is selected in this state, the second STA function unit 243 is automatically selected and the DPP is performed.

There is assumed another example where the automatic communication parameter setting method is selected in a state where the DPP is currently being performed by the first STA function unit 242. In this case, since the DPP is performable by a plurality of STA function units at the same time, the DPP is selectable even if the DPP processing is currently being performed by the first STA function unit 242. When the DPP is selected, the communication apparatus 101 can newly start the DPP processing via the second STA function unit 243.

The description has been provided of a configuration where a communication apparatus concurrently operates a plurality of communication interfaces. In this case, the communication apparatus performs the automatic communication parameter setting by selecting a communication interface from a plurality of communication interfaces that are capable of performing the STA functions. In the conventional configuration including only one STA function, the communication apparatus does not need to consciously determine which communication interface is to be used to perform the automatic communication parameter setting. However, in a configuration including a plurality of communication interfaces, the communication apparatus needs to select a communication interface from a plurality of communication interfaces before performing the DPP.

In a configuration including a plurality of STA functions, the present invention enables automatic selection of a communication interface from a plurality of communication interfaces that can perform the STA functions, so that the automatic communication parameter setting is performed. This eliminates the user's need to recognize which communication interface is to be used to perform the automatic communication parameter setting, thus improving the user convenience.

The description has been provided of a case where the communication apparatus 101 according to the present embodiment includes two different STA functions (the first STA function unit 242 and the second STA function unit 243), the present invention is not limited thereto. The present invention is also applicable to a case where the communication apparatus 101 includes three or more STA functions.

Thus, the user convenience is improved in a communication apparatus concurrently operating a plurality of STA functions.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like. While the present invention has been described with reference to embodiments, it is to be understood that the invention is not limited to the disclosed embodiments. The scope of the following claims is to be accorded the broadest interpretation so as to encompass all such modifications and equivalent structures and functions.

While the present invention has been described with reference to embodiments, it is to be understood that the invention is not limited to the disclosed embodiments. The scope of the following claims is to be accorded the broadest interpretation so as to encompass all such modifications and equivalent structures and functions.

## Claims

1. A communication apparatus (101) having a plurality of station (STA) functions, the communication apparatus (101) comprising:
a control means for exclusively operating the plurality of STA functions;
an execution means for executing sharing processing for sharing a parameter to be used to connect to an access point (AP);
an acquisition means for acquiring information about the plurality of STA functions;
a selection means for selecting an STA function to be used for the sharing processing in accordance with the information acquired by the acquisition means; and
a connection means for connecting to the AP based on the parameter shared by using the STA function selected by the selection means.

2. The communication apparatus (101) according to claim 1, wherein the selection means selects an STA function that is unconnected to an AP out of the plurality of STA functions.

3. The communication apparatus (101) according to claim 1 or claim 2, further comprising a determination means for determining a priority of each of the plurality of STA functions,
wherein the acquisition means acquires, as the information, the priority determined by the determination means, and
wherein the selection means selects an STA function based on the priority.

4. The communication apparatus (101) according to claim 3, wherein the determination means determines the priority based on frequency band information preset for each of the plurality of STA functions.

5. The communication apparatus (101) according to claim 1, further comprising a sharing means for sharing the acquired parameter between the plurality of STA functions in the sharing processing.

6. The communication apparatus (101) according to any preceding claim, wherein the sharing processing is a Wi-Fi Protected Setup (WPS) or a Device Provisioning Protocol (DPP).

7. A method for controlling a communication apparatus (101) having a plurality of station (STA) functions, the method comprising:
performing control to exclusively operate the plurality of STA functions by using one radio frequency (RF) circuit;
executing sharing processing for sharing a parameter to be used to connect to an access point (AP);
acquiring information about the plurality of STA functions;
selecting an STA function to be used for the sharing processing in accordance with the acquired information; and
connecting to the AP based on the parameter shared by using the selected STA function.

8. A program for causing a computer to function as the communication apparatus according to any one of claims 1 to 6.

9. A computer-readable storage medium having stored thereon the program of claim 8.
